# EUROPÄISCHE PATENTSCHRIFT

(11) **EP 0 373 386 B1**
(45) Veröffentlichungstag und Bekanntmachung des Hinweises auf die Patenterteilung: **21.02.1996**
(21) Anmeldenummer: 89121479.3
(22) Anmeldetag: 21.11.1989
(51) Int. Cl.: G08G 1/0967

(54) **Einrichtung zur Information des Fahrers eines Kraftfahrzeuges**
Motor vehicle driver information apparatus
Dispositif pour informer le conducteur d'un véhicule automobile

(30) Priorität: 16.12.1988 DE 3842417
(43) Veröffentlichungstag der Anmeldung: 20.06.1990
(73) Patentinhaber: ROBERT BOSCH GMBH, D-70442 Stuttgart (DE)
(72) Erfinder: Knoll, Peter, Prof. Dr., D-7505 Ettlingen 1 (DE); König, Winfried, Dr.-Ing., D-7507 Pfinztal-Berghausen (DE); Vollmer, Rudolph, Dr.-Ing., D-3201 Barienrode (DE); Brunke, Udo, Dipl.-Ing. (FH), D-3201 Diekholzen (DE); Heiland-Franzen, Christa, Dipl.-Ing., D-7514 Eggenstein-Leopoldshafen (DE); Günther, Clemens, Dipl.-Ing., D-7831 Sexau (DE); Geiser, Georg, Dipl.-Ing., D-7500 Karlsruhe 51 (DE); Haller, Rudolph, Dipl.-Ing., D-7516 Karlsbad (DE)

(56) Entgegenhaltungen:
- EP-A- 0 059 952
- DE-A- 3 520 972
- DE-A- 3 628 333
- FR-A- 2 430 647
- US-A- 4 455 551
- US-A- 4 647 722
- US-A- 4 771 390
- IBM TECHNICAL DISCLOSURE BULLETIN. Bd. 16, Nr. 4, September 1973, NEW YORK US Seiten 1275 - 1276; DEATON ET AL.: 'Dual-bit key protects read-only and supervisory control program only writeable storage'
- FUNK-TECHNIK. Bd. 41, Nr. 7, Juli 1986, HEIDELBERG DE Seiten 273 - 278; C. REUBER: 'Elektronik für Information und Navigation im Auto'

## Beschreibung

### Stand der Technik

Die Erfindung geht aus von einem digitaler Sprachspeicher für Informationen in einem Kraftfahrzeug nach der Gattung des Hauptanspruches. Es ist schon ein digitaler Sprachspeicher zur Information des Fahrers bekannt, der in einem Rundfunkempfänger mit einem Verkehrsfunkdecoder eingebaut ist. In den digitalen Sprachspeicher sind innerhalb eines einstellbaren Zeitfensters Verkehrsfunkmeldungen abspeicherbar und beliebig oft abrufbar. Ungünstig ist, daß der vorhandene digitale Sprachspeicher seine geringe Speicherkapazität nicht optimal ausnutzt, da er nicht erkennen kann, welche Informationen bereits veraltet und damit überschreibbar sind. Die zahlreichen Bedienelemente und Anzeigen dieses Gerätes sind insgesamt recht unübersichtlich und bewirken, daß der Fahrer leicht vom Verkehrsgeschehen abgelenkt wird.

Zu Aufnahmen von Rundfunksendungen sind weiterhin Cassettengeräte bekannt. Ungünstig ist, daß die Aufzeichnungen auf einem Magnetband nicht ohne langes Absuchen zu finden sind, da ein direkter Zugriff wie bei einem Datenspeicher nicht durchführbar ist. Die Abspeicherung von Informationen auf einem Magnetband erfolgt nämlich sequentiell.

### Vorteile der Erfindung

Der erfindungsgemäße digitale Sprachspeicher für Informationen in einem Kraftfahrzeug mit den Merkmalen des Hauptanspruchs hat demgegenüber den Vorteil, daß die in einem Kraftfahrzeug eingebauten Geräte mit dem digitalen Sprachspeicher zu einem Gesamtsystem verbunden sind, wobei alle Informationen der angeschlossenen Geräte selektiv auf einem Monitor darstellbar sind. Wichtige Informationen wie Verkehrsmeldungen, Telefongespräche, Telefonnummern oder andere Notizen sind in vorteilhafter Weise in dem digitalen Sprachspeicher abgelegt, der zu allen Geräten Zugriff hat. Um die verfügbare Speicherkapazität optimal ausnutzen zu können, weist der digitale Sprachspeicher mehrere Speicherbereiche auf, die jeweils einem Gerät zugeordnet sind. Beispielsweise ist so ein Speicherbereich für Verkehrsmeldungsdaten reserviert, der vorteilhaft erst dann überschrieben wird, wenn die in ihm enthaltenen Verkehrsinformationen abgehört wurden und nicht mehr benötigt werden. Ein weiterer Bereich ist für Telefonnotizen des Mobiltelefons reserviert. In ihm können sowohl ankommende Gespräche wie auch Telefonmeldungen in vorteilhafter Weise gespeichert sein. Weiterhin ist vorteilhaft, daß die Speicherbereiche keine festen Grenzen haben, sondern je nach Bedarf erweiterbar sind, wobei nichtbenutzte Speicherbereiche einem bestimmten Speicherbereich zugeordnet werden.

Durch die in den Unteransprüchen aufgeführten Maßnahmen sind vorteilhafte Weiterbildungen und Verbesserungen der im Hauptanspruch eingegebenen Einrichtung möglich. Durch die Verwendung eines Halbleiterspeichers ist vorteilhaft ein schneller Zugriff zu den Informationen gegeben. Weiterhin ist vorteilhaft, daß dadurch die Zuverlässigkeit erhöht wird, da keine verschleißanfällige Mechanik erforderlich ist.

Aus der US-A-4 771 390 ist eine Sprachausgabeeinheit mit einem digitalen Sprachspeicher bekannt, der auf die Lautsprecher eines Autoradios schaltbar ist. In dem Speicher sind vorprogrammierte Mitteilungen bezüglich des Fahrzeugs abgespeichert, die als Hinweis für bestimmte Betriebszustände des Fahrzeugs abgerufen werden können.

Aus der FR-A-2 430 647 ist ein Speichersystem zur Speicherverwaltung in einer Datenverarbeitungsanlage bekannt. Dieser Speicher ist in mehrere Bereiche eingeteilt, die über einen Adressenwandler entsprechend den ankommenden Daten verwaltet werden.

Es is Aufgabe die Erfindung, einen Sprachspeicher für weitere externe Geräte zur Verfügung zu stellen, der so organisiert ist, daß auch noch Informationen gespeichert verloren werden können, wenn die jeweiligen, den einzelnen externen Geräten zugeordneten Speicherbereiche voll sind.

Auch ist vorteilhaft, daß der digitale Sprachspeicher mit einer Schaltmatrix verbunden ist, weil dadurch die Verdrahtung zu den einzelnen Geräten sehr stark vereinfacht wird. Die im Kraftfahrzeug vorhandenen Geräte wie Autoradio, Mobiltelefon, CD-Player, Ortungs - und Navigationseinrichtung und Alarmanlage können durch einfachen Anschluß an die Schaltmatrix gesteuert werden und ihre Daten an den digitalen Sprachspeicher übertragen. Eine Erweiterung des Systems durch Anschluß eines weiteren Gerätes kann auf diese Weise ohne großen Installationsaufwand vorteilhaft durchgeführt werden.

Durch die Verwendung eines Sprachsynthesizers können die digital gespeicherten Daten auch vorteilhaft akustisch über Lautsprecher ausgegeben werden. Hierzu eignen sich besonders vorteilhaft die Lautsprecher des Autoradios.

Da der digitale Sprachspeicher durch externe Steuersignale die beispielsweise von der Dateneingabe kommen, steuerbar ist, können vorteilhaft freie Speicherbereiche zur Abspeicherung wichtiger Informationen ausgewählt werden, ohne daß andere Speicherbereiche, die beispielsweise residente Daten enthalten, überschrieben werden.

Durch die Einteilung des digitalen Sprachspeichers in mehrere Speicherbereiche wird auf einfache Weise verhindert, daß ungewollt Daten von den einzelnen Geräten überschrieben werden. Vorteilhaft ist, daß die Speicherbereiche für Warnmeldungen, Meldetext und Notizen nur von typgleichen Daten überschreibbar sind, während ältere Verkehrsmeldungen die am Datum und der Zeit erkennbar sind, von allen Datentypen überschreibbar sind. Dadurch ist die Speicherkapazität an die zu speichernde Datenmenge besonders vorteilhaft anpaßbar.

Besonders vorteilhaft ist auch, daß die Anzeigen der einzelnen Geräte zu einer zentralen Datenausgabe kombiniert sind. Dadurch wird die Übersichtlichkeit der Einrichtung verbessert. Insbesondere ist vorteilhaft, daß auf dem Monitor Felder vorgesehen sind, die den einzelnen Bedien- und Kontrollfunktionen zugeordnet werden. Beispielsweise ist vorteilhaft, daß in einem Feld ein Menü zur Auswahl der Geräte angezeigt wird, die über eine Cursorsteuerung ansprechbar sind. Dadurch ist die Bedienung der Geräte sehr einfach und sicher. Auch ist vorteilhaft, daß in einem weiteren Feld die aktuellen Informationen ausgegeben werden. Beispielsweise werden die Informationen wie Autoradioeinstellungen oder Fahrtziele im oberen Protokollbereich angezeigt. Die augenblicklichen Aktionen werden dagegen vorteilhaft im Aktionsbereich dargestellt. Der Fahrer kann dann sehr schnell die angezeigten Informationen erfassen und wird dadurch nur wenig vom Verkehrsgeschehen abgelenkt. Die schwenkbare Anordnung des Monitors begünstigt vorteilhaft die Ablesbarkeit der Informationen.

Besonders vorteilhaft ist auch, daß die Dateneingabe zwei autarke Einheiten aufweist, von denen eine nur wenige Bedienelemente enthält und vorzugsweise auf dem Lenkrad im Griffbereich des Fahrers montiert ist. Mit diesen Bedienelementen kann der Fahrer während der Fahrt die Bedienung der Einrichtung mit wenigen Handgriffen durchführen. Detailliertere und aufwendigere Eingaben, wie beispielsweise Namenseingaben für das Ortungs- und Navigationssystem können dann mit der zweiten Eingabeeinheit durchgeführt werden, da sie eine alphanumerische Tastatur hat. Auch ist vorteilhaft, die zweite Eingabeeinheit derart in einen Köcher zu stecken, daß der Teil der Bedieneinrichtung mit den Cursorbedienelementen aus dem Köcher herausschaut. Dadurch kann auch der Beifahrer die Bedienung der Eingabeeinheit vornehmen, ohne daß er dem Fahrer ins Lenkrad greifen muß, um die dortigen Bedieneinrichtungen zu betätigen.

Weiterhin ist vorteilhaft, daß die portable Eingabeeinheit eine Hör- und Sprechgarnitur aufweist, die auf der den Eingabefeldern abgewandten Seite des Gehäuses angeordnet ist. Dadurch ist einerseits eine bequeme Bedienung der Eingabefelder gegeben und andererseits ist die Benutzung der Eingabeeinheit als Telefonhörer nutzbar. Mit diesem Hörer können dann beispielsweise Telefongespräche geführt werden. Weiterhin ist vorteilhaft, daß diese Eingabeeinheit mit Infrarotempfängern und Infrarotsendern ausgerüstet ist, so daß eine schnurlose Verbindung zwischen der Eingabeeinheit und dem digitalen Sprachspeicher besteht. Dadurch ist die Eingabeeinheit auch von anderen Fahrzeuginsassen bedienbar, ohne daß herumhängende Leitungen stören.

### Zeichnung

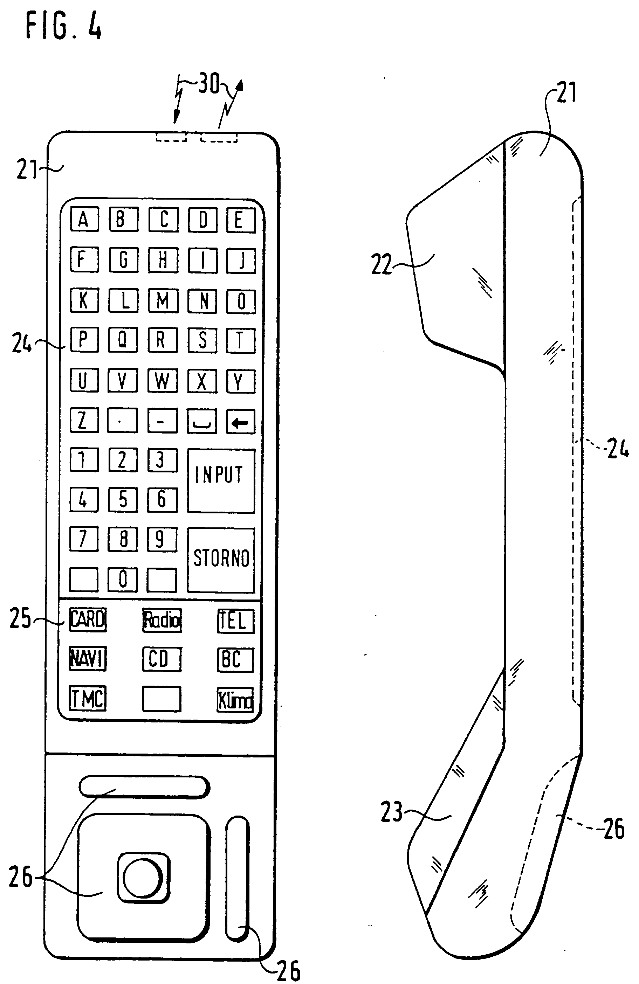

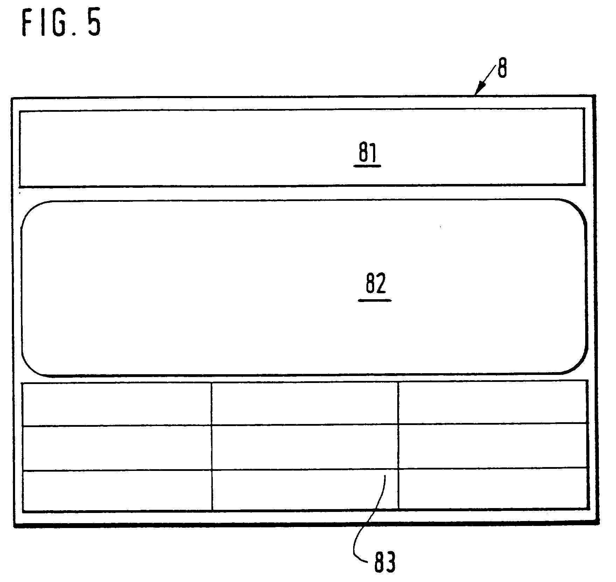

Ein Ausführungsbeispiel der Erfindung ist in der Zeichnung dargestellt und in der nachfolgenden Beschreibung näher erläutert. Es zeigen Figur 1 ein Blockschaltbild, Figur 2 den Aufbau des digitalen Sprachspeichers, Figur 3 ein Ausführungsbeispiel der ortsfesten Bedieneinheit, Figur 4 ein Ausführungsbeispiel der portablen Bedieneinheit und Figur 5 ein Ausführungsbeispiel der Datenausgabe.

### Beschreibung des Ausführungsbeispiels

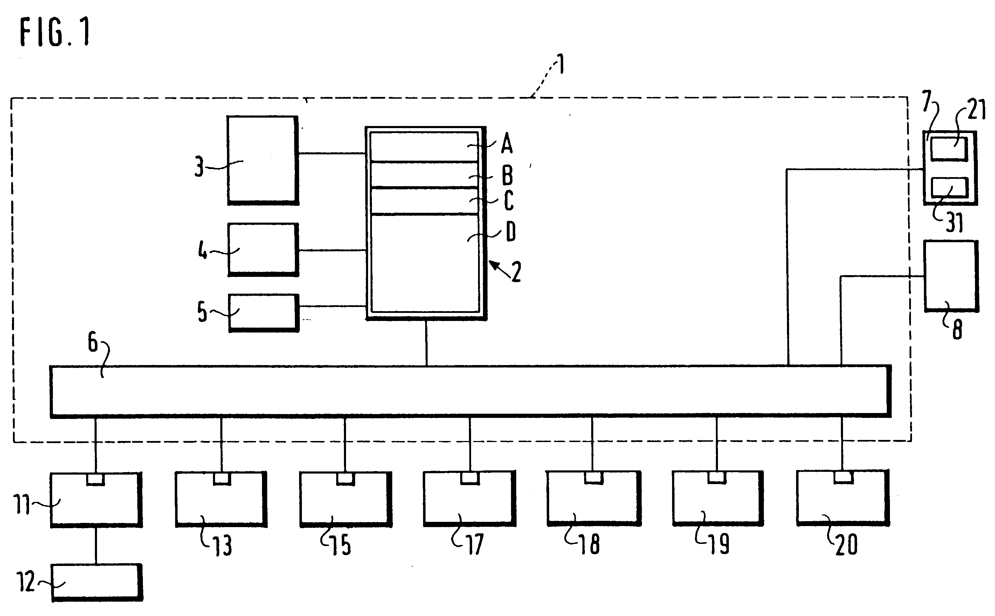

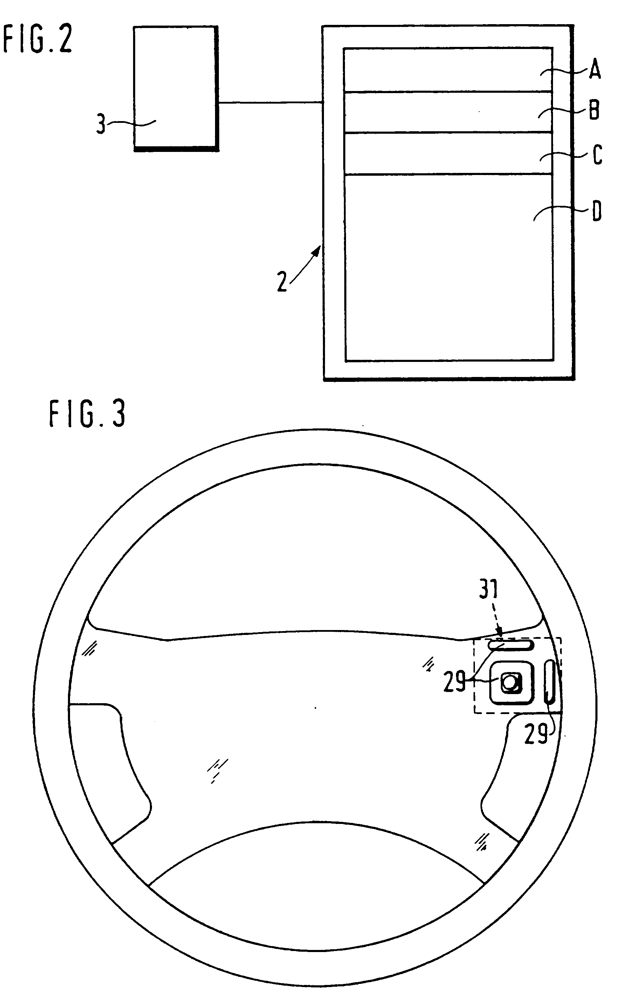

In Figur 1 ist das Blockschaltbild des digitalen Sprachspeichers zur Information in einem Kraftfahrzeug dargestellt. Es weist im wesentlichen einen digitalen Sprachspeicher 2 auf, der in mehrere Bereiche A bis D eingeteilt ist. Der Sprachspeicher 2 ist weiter verbunden mit einem Bereichswähler 3, einem Sprachsynthesizer 4 und einer Uhr 5. Der digitale Sprachspeicher 2 ist über Datenleitungen und Steuerleitungen ebenfalls verbunden mit einer Schaltmatrix 6, die mehrere Anschlüsse zum Anschluß externer Geräte aufweist. Als externe Geräte ist hier ein Autoradio 11 mit Lautsprechern 12, ein Mobiltelefon 13, eine Freisprecheinrichtung 15, ein CD-Player 17, ein Ortungs- und Navigationssystem 18, eine Alarmanlage 19 und/oder ein Fahrzeugprüfgerät 20 angeschlossen. Zur Dateneingabe ist eine Dateneingabe 7 vorgesehen, die eine ortsfeste und eine portable Bedieneinrichtung 31, 21 aufweist. Die Bedieneinrichtung 31 nach Figur 3 weist Bedienelemente 29 zur Cursorsteuerung auf. Zur optischen Ausgabe von Daten und Informationen ist eine Datenausgabe 8 vorgesehen, auf der wahlweise die Daten aller angeschlossenen Geräte angezeigt werden.

### Im folgenden wird die Funktionsweise beschrieben.

Die Auswahl der einzelnen externen Geräte 11 bis 20 erfolgt durch eine der beiden Dateneingaben 21, 31, die gemäß der Figur 1 als Dateneingabe 7 gekennzeichnet sind. Mit der Auswahl eines Gerätes erfolgt automatisch die Durchschaltung der notwendigen Daten- und Steuerleitungen zum digitalen Sprachspeicher 2 und den weiteren angeschlossenen Einheiten, wie beispielsweise der Schaltmatrix 6 und dem Bereichswähler 3. Die Anwahl eines Gerätes 11 bis 20 erfolgt entweder über Tasteneingaben oder durch Steuerung eines Cursors im Menüfeld 83 des Monitors 8. Selbstverständlich sind auch andere Eingabeeinrichtungen verwendbar, wie beispielsweise Lightpens, Eingabetableaus oder sprachgesteuerte Eingabesysteme. Wurde zum Beispiel das Autoradio 11 angewählt, dann erscheinen auf dem Monitor 8 im oberen Bereich, dem Protokollbereich 81, eine einstellbare Radiostation sowie die üblicherweise vorhandenen Funktionsanzeigen des Autoradios. So kann beispielsweise angezeigt werden, ob der eingestellte Sender Verkehrsmeldungen überträgt. In diesem Fall wird der Verkehrsfunkdecoder über die Schaltmatrix 6 mit dem digitalen Sprachspeicher verbunden, der die gesendeten Verkehrsmeldungen aufzeichnet. Diese Aufzeichnung kann dann beliebig oft abgefragt werden und entweder über die Lautsprecher 12 akustisch ausgegeben oder auf dem Monitor 8 angezeigt werden.

In der gleichen Weise werden auch die übrigen Einrichtungen 13 bis 20 angewählt und in Betrieb genommen . Wird das Ortungs- und Navigationssystem 18 angewählt, dann gibt der Fahrer anschließend mit der Dateneingabe 7 die gewünschte Fahrtroute und sein Fahrtziel ein. Die von ihm durchgeführten Aktionen werden auf dem Monitor 8 im mittleren Bereich, dem Aktionsbereich 82 dargestellt. Hier sind ebenfalls die Fahrt- und Positionsinformationen des Ortungs- und Navigationssystem darstellbar. Ergänzende Informationen, wie beispielsweise die Uhrzeit, das Tagesdatum oder fahrzeugspezifische Daten werden im Protokollbereich 81 dargestellt.

Die Signalleitungen der externen Geräte 11 bis 20 sind mit der Schaltmatrix 6 verbunden, die das jeweils angewählte Gerät mit dem digitalen Sprachspeicher 2 verbindet. Der digitale Sprachspeicher 2 ist in mehrere Bereiche A bis D aufgeteilt, die teilweise überschreibbar bzw. nicht überschreibbar sind und von dem Bereichswähler 3 verwaltet werden. Diesem Bereichswähler 3 und dem digitalen Sprachspeicher ist eine zentrale Bedeutung beizumessen. Um einerseits die Speichergröße dieses Speichers in wirtschaftlichen Grenzen zu halten, andererseits aber den vorhandenen Speicher optimal ausnutzen zu können, ist gemäß Figur 2 vorgesehen, einzelnen Geräten 11, 13, 15 jeweils einem Speicherbereich fest zuzuordnen. Der restliche Speicher ist als variabler Speicher ausgelegt, der dann beschrieben wird, wenn die festen Speicherbereiche vollgeschrieben sind. Der variable Speicher kann von allen Einrichtungen 11 bis 20 nach bestimmten Regeln beschrieben werden, wobei bestimmte Prioritäten zu setzen sind. Die Verwaltung des gesamten Speichers sowie die Einhaltung der Überschreibregeln für den digitalen Sprachspeicher 2 wird von dem Bereichswähler 3 organisiert.

In dem Ausführungsbeispiel wurde zunächst ein nicht überschreibbarer Speicherbereich A gewählt, der für Warndaten reserviert ist. Aus ihm wird eine Warnmeldung ausgelesen, beispielsweise Fahrtanweisungen wie "Links abbiegen" oder Informationstexte wie "Vorsicht Glatteis". Auch enthält dieser Warnspeicher Warndaten, die von einem Fahrzeugprüfgerät 20 oder einer Alarmanlage 19 abrufbar sind. Diese Daten sind nicht überschreibbar, sie enthalten vorformulierte Schlagworte oder Begriffe. An diesen Speicherbereich grenzt ein überschreibbarer Bereich B, der einen Meldetext enthält. Der Meldetext wird benötigt, um bei einem Telefonanruf dem Anrufer entsprechende Hinweise zu geben, wenn der Fahrer nicht erreichbar ist. Der Meldetextspeicher ist relativ klein und kann beliebig besprochen werden. Der Bereich B mit den Meldetextdaten ist mit dem Mobiltelefon 13 verbunden, die übrigen Geräte haben auf diesen Speicherbereich B keinen Zugriff.

An diesen Bereich schließt sich der Bereich C mit einem überschreibbaren Speicher für Notizen an, der mit der Freisprecheinrichtung 15 oder der Dateneingabe 7 verbunden ist. Wird nun über die Dateneingabe 7 die Freisprecheinrichtung 15 angewählt, dann ist diese mit dem Bereich C des digitalen Sprachspeichers 2 verbunden, um beispielsweise persönliche Daten, Telefonnummern, Adressen oder sonstige Informationen abzuspeichern. Dieser Speicherbereich hat nur eine relativ kleine Kapazität. Einzelne Notizen oder Daten können automatisch oder manuell gelöscht werden oder durch neuen Eingaben überschrieben werden.

Die bisherigen festgelegten Speicherbereiche benutzen nur einen relativ kleinen Teil des verfügbaren digitalen Sprachspeichers 2. Sie sind so bemessen, daß sie für den normalen Gebrauch gerade noch ausreichend sind. Sollen weiteren Daten gespeichert werden, insbesondere Verkehrsmeldungen, die häufig erneuert werden und nur von relativ kurzzeitiger Bedeutung sind, dann werden diese Informationen in den restlichen variablen Speicher D geschrieben.

Der variable Speicher D ist in Blöcken aufgeteilt, in die die Informationen, wie Verkehrsmeldungen, geschrieben werden. Für sie ist ein Mindestspeicher reserviert. Der variable Speicher D ist mehrfach nutzbar. Sind die Speicherbereiche für den Meldetext und die Notizen vollgeschrieben, können weitere Informationen in den variablen Speicher D geschrieben werden. Der Bereichswähler 3 schaltet bei Bedarf die externen Geräte 11, 13 und die Dateneingabe 7 über die Schaltmatrix 6 auf den variablen Speicher D. Bei Verkehrsmeldungen wird mit dem Verkehrsmeldesignal der variable Speicher D aktiviert. Sind noch keine Daten in ihm abgespeichert, dann wird er mit Verkehrsmeldedaten blockweise beschrieben, bis er voll ist. Mit dem Verkehrsmeldeendesignal wird der Speicher abgeschaltet. Die restliche Speicherkapazität ist nun verfügbar für die anderen Einrichtungen, beispielsweise für Notizen, Anrufe oder Meldetextdaten. Reicht die Speicherkapazität nicht aus, was insbesondere bei weiteren Verkehrsmeldungen der Fall sein kann, dann wird geprüft, welche Daten der früheren Verkehrsmeldungen veraltet sind und überschrieben werden können. Als Kriterium fürs Überschreiben gilt, ob die früheren Verkehrsmeldungen bereits abgehört wurden. Zu diesem Zweck werden alle abzuspeichernden Daten codiert, damit der Bereichswähler 3 auf einfache Weise die Aktualität der Daten feststellen kann.

Wurden Teile des variablen Speichers D mit Telefonanrufen beschrieben, dann sind diese Speicherbereiche nicht durch neue Verkehrsmeldungen überschreibbar. Die Daten der Telefonanrufe haben Priorität gegenüber allen anderen Daten. Sie können nur von Hand gelöscht werden.

In ähnlicher Weise werden die weiteren Notizen auf freie Bereiche des variablen Speichers D abgespeichert. Auch sie können Speicherbereiche von älteren Verkehrsmeldungen überschreiben, wenn der eigene Speicherbereich nicht ausreicht. Sie sind von Verkehrsmeldungen nicht automatisch überschreibbar. Sie können nur manuell gelöscht werden.

Meldetextdaten werden in der gleichen Weise im variablen Speicher D gespeichert wie Notizen. Auch sie sind nur manuell löschbar und sind für ein automatisches Überschreiben durch Verkehrsmeldedaten nicht zugelassen.

Selbstverständlich ist dieses Speichersystem erweiterbar für den Anschluß weiterer externer Geräte. Durch Codierung der einzelnen Geräte mit einem Erkennungscode erkennt der Bereichswähler 3 den abzuspeichernden Datentyp und die richtige Zuordnung zu einem der Speicherbereiche A bis D. Da die verschiedenen Datentypen im variablen Speicher D gemischt abgelegt sind, sind sie durch die Codierung auf einfache Weise beim Auslesen wiederzufinden und entsprechend ihrer Aktualität einzustufen.

Der Bereichswähler 3 ist dem Fachmann bekannt und braucht daher nicht näher beschrieben zu werden. Er enthält beispielsweise ein Programm mit dem die Speicherplätze des digitalen Sprachspeichers 2 nach den beschriebenen Regeln verwaltet werden.

Da an den digitalen Sprachspeicher 2 auch ein Sprachsynthesizer 4 angeschlossen ist, erfolgt über die Schaltmatrix 6 die Ausgabe von Sprachsignalen wahlweise über die an das Autoradio 11 angeschlossenen Lautsprecher 12. Auf die gleiche Weise kann auch die Ausgabe der Uhrzeit akustisch über den Sprachsynthesizer 4 erfolgen. Im Einzelfall ist eine direkte Speicherung der Uhrzeit erforderlich, wenn beispielsweise Verkehrsmeldungen empfangen werden. Sie wird bei der Ausgabe der Verkehrsmeldungen dann gleichzeitig mit ausgegeben.

In weiterer Ausgestaltung der Erfindung ist vorgesehen, daß anstelle der Schaltmatrix 6 jedes anschließbare Gerät eine adressierbare Eingangs- Ausgangsschaltung aufweist, die mit dem digitalen Sprachspeicher 2 verbunden ist.

## Patentansprüche

1. Digitaler Sprachspeicher für Informationen in einem Kraftfahrzeug mit externen Geräten, beispielsweise einem Rundfunkempfänger, einem Verkehrsfunkdecoder und mit einem Mobiltelefon, dadurch gekennzeichnet, daß der digitale Sprachspeicher (2) in überschreibbare und nicht überschreibbare Speicherbereiche (A bis C) aufgeteilt ist, daß deren Größe festgelegt ist, daß jeweils einem der Speicherbereiche(A bis C) jeweils ein externes Gerät (11 bis 20) fest zugeordnet ist sodaß Informationen aus den externen Geräten in diesen Speicherbereichen abspeicherben sind, daß ein variabler Speicher (D) vorgesehen ist, der als Zusatzspeicher für die Teile des Sprachspeichers (A bis C) dient, deren Größe festgelegt ist, daß die externen Geräte (11 bis 20) auf den variablen Speicher (D) zur Abspeicherung von Informationen Zugriff haben, wobei die Aufteilung des variablen Speichers (D) in Abhängigkeit von den zu speichernden Informationen veränderbar ist, und daß ein Bereichswähler (3) vorgesehen ist, der die Speicherbereiche (A bis D) des digitalen Sprachspeichers (2) verwaltet.

2. Digitaler Sprachspeicher nach Anspruch 1, dadurch gekennzeichnet, daß der digitale Sprachspeicher (2) ein Halbleiterspeicher ist.

3. Digitaler Sprachspeicher nach einem der vorhergehenden Ansprüche, dadurch gekennzeichnet, daß der digitale Sprachspeicher (2) mit einer Schaltmatrix (6) verbunden ist und daß an die Schaltmatrix (6) die Geräte (11 bis 20), vorzugsweise ein Rundfunkempfänger, ein Mobiltelefon, eine Freisprecheinrichtung, ein CD-Player, ein Ortungs- und/oder Navigationssystem, eine Alarmanlage und ein Fahrzeugprüfgerät anschließbar ist.

4. Digitaler Sprachspeicher nach einem der vorhergehenden Ansprüche, dadurch gekennzeichnet, daß durch den digitalen Sprachspeicher (2) ein Sprachsynthesizer (4) ansteuerbar ist.

5. Digitaler Sprachspeicher nach Anspruch 4, dadurch gekennzeichnet, daß die Wiedergabe der in dem digitalen Sprachspeicher (2) enthaltenen Informationen über das Autoradio (11) und den angeschlossenen Lautsprecher (12) erfolgt.

6. Digitaler Sprachspeicher nach einem der vorhergehenden Ansprüche, dadurch gekennzeichnet, daß der digitale Sprachspeicher (2) nicht überschreibbare residente Daten enthält.

7. Digitaler Sprachspeicher nach einem der vorhergehenden Ansprüche, dadurch gekennzeichnet, daß der digitale Sprachspeicher (2) durch externe Steuersignale, vorzugsweise der Dateneingabe (7) steuerbar ist.

8. Digitaler Sprachspeicher nach einem der vorhergehenden Ansprüche, dadurch gekennzeichnet, daß jeweils ein Teil des gesamten Sprachspeichers für Warnmeldungen, für einen Meldetext des Mobiltelefons und für Notizen vorsehbar ist und daß der restliche Teil für Verkehrsmeldungen und weitere Notizen, Anrufe und Meldetext verwendbar ist.

9. Digitaler Sprachspeicher nach Anspruch 8, dadurch gekennzeichnet, daß die Speicherbereiche für Notizen, Anrufe und Meldetext nur durch Daten gleichen Typs überschreibbar sind, während der Verkehrsmeldespeicher unter Berücksichtigung des Aufnahmedatums und der Zeit von allen Datentypen überschreibbar ist.

10. Digitaler Sprachspeicher nach Anspruch 1, dadurch gekennzeichnet, daß die Anzeigeeinheiten der einzelnen Geräte (11 bis 20) zu einer zentralen Datenausgabe (8) kombinierbar sind.

11. Digitaler Sprachspeicher nach Anspruch 10, dadurch gekennzeichnet, daß die Datenausgabe (8) einen Monitor aufweist, der vorzugsweise in einen Protokollbereich (81), Aktionsbereich (82) und einen Menübereich (83) einteilbar ist.

12. Digitaler Sprachspeicher nach Anspruch 10 oder 11, dadurch gekennzeichnet, daß der Monitor drehbar und/oder schwenkbar angeordnet ist.

13. Digitaler Sprachspeicher nach einem der Ansprüche 10 bis 12, dadurch gekennzeichnet, daß im Aktionsbereich (82) Datenfelder vorsehbar sind, auf denen die augenblicklichen Aktionen des digitalen Sprachspeichers (2) anzeigbar sind.

14. Digitaler Sprachspeicher nach Anspruch 1, dadurch gekennzeichnet, daß die Dateneingabe (7) zwei autarke Einheiten (21, 31) aufweist, von denen eine Eingabeeinheit (31) ortsfest, vorzugsweise auf dem Lenkrad eines Kraftfahrzeuges angeordnet ist und die zweite Eingabeeinheit (21) portabel ist und in einen Köcher im Griffbereich des Fahrers und des Beifahrers einsetzbar ist.

15. Digitaler Sprachspeicher nach Anspruch 14, dadurch gekennzeichnet, daß die Eingabeeinheit (21) eine alphanumerische Tastatur (24), eine Geräteauswahltastatur (25) und Cursorbedienelemente (26) aufweist.

16. Digitaler Sprachspeicher nach Anspruch 14 oder 15, dadurch gekennzeichnet, daß die Eingabeeinheit (21) auf der den Tastaturen (24 bis 26) abgewandten Seite eine Hör- und Sprechgarnitur (22, 23) aufweist.

17. Digitaler Sprachspeicher nach einem der Ansprüche 14 bis 16, dadurch gekennzeichnet, daß die portable Eingabeeinheit (21) eine Infrarotsende- und Empfangseinrichtung (30) aufweist.

18. Digitaler Sprachspeicher nach einem der Ansprüche 14 bis 17, dadurch gekennzeichnet, daß bei Ablage der portablen Eingabeeinheit (21) in einen Köcher die Geräteauswahltasten (25) und die Cursorbedienelemente (26) zur Betätigung frei zugänglich sind.

19. Digitaler Sprachspeicher nach Anspruch 14, dadurch gekennzeichnet, daß die ortsfeste Dateneingabe (31) vorzugsweise Cursorbedienelemente (29) aufweist und auf einer Lenkradspeiche am Lenkradrand eines im Kraftfahrzeug befindlichen Lenkrades angeordnet ist.

## Claims

1. Digital voice memory for information in a motor vehicle having external devices, for example a radio receiver, a traffic announcement decoder and having a mobile telephone, characterized in that the digital voice memory (2) is divided into overwritable and non-overwritable memory areas (A to C), in that the size of the said memory areas is fixed, in that in each case one external device (11 to 20) is permanently assigned to one of the memory areas (A to C) in each case, with the result that information from the external devices can be stored in these memory areas, in that there is provided a variable memory (D) which serves as a supplementary memory for those sections of the voice memory (A to C) whose size is fixed, in that the external devices (11 to 20) have access to the variable memory (D) for the purpose of storing information, it being possible to alter the division of the variable memory (D) as a function of the information to be stored, and in that an area selector (3) is provided, which manages the memory areas (A to D) of the digital voice memory (2).

2. Digital voice memory according to Claim 1, characterized in that the digital voice memory (2) is a semiconductor memory.

3. Digital voice memory according to one of the preceding claims, characterized in that the digital voice memory (2) is connected to a switching matrix (6), and in that it is possible to connect to the switching matrix (6) the devices (11 to 20), preferably a radio receiver, a mobile telephone, a hands-free talking device, a CD player, a location and/or navigation system, an alarm system and a vehicle test device.

4. Digital voice memory according to one of the preceding claims, characterized in that a voice synthesizer (4) can be driven by the digital voice memory (2).

5. Digital voice memory according to Claim 4, characterized in that the information contained in the digital voice memory (2) is played back via the car radio (11) and the connected loudspeaker (12).

6. Digital voice memory according to one of the preceding claims, characterized in that the digital voice memory (2) contains resident data which cannot be overwritten.

7. Digital voice memory according to one of the preceding claims, characterized in that the digital voice memory (2) can be controlled by external control signals, preferably from the data input (7).

8. Digital voice memory according to one of the preceding claims, characterized in that in each case one section of the entire voice memory can be provided for warning messages, for a message text of the mobile telephone and for notices, and in that the remaining section can be used for traffic reports and further notices, calls and message text.

9. Digital voice memory according to Claim 8, characterized in that the memory areas for notices, calls and message text can be overwritten only by data of the same type, whereas the traffic report memory can be overwritten by all data types, while taking account of the recording date and the time.

10. Digital voice memory according to Claim 1, characterized in that the display units of the individual devices (11 to 20) can be combined to form a central data output (8).

11. Digital voice memory according to Claim 10, characterized in that the data output (8) has a monitor which can preferably be divided into a log area (81), action area (82) and a menu area (83).

12. Digital voice memory according to Claim 10 or 11, characterized in that the monitor is arranged with the ability to rotate and/or pivot.

13. Digital voice memory according to one of Claims 10 to 12, characterized in that there can be provided in the action area (82) data fields on which the instantaneous actions of the digital voice memory (2) can be displayed.

14. Digital voice memory according to Claim 1, characterized in that the data input (7) has two autonomous units (21, 31), of which one input unit (31) is arranged to be stationary, preferably on the steering wheel of a motor vehicle, and the second input unit (21) is portable and can be inserted into a case at hand for the driver and the passenger.

15. Digital voice memory according to Claim 14, characterized in that the input unit (21) has an alphanumeric keypad (24), a device selection keypad (25) and cursor operating elements (26).

16. Digital voice memory according to Claim 14 or 15, characterized in that the input unit (21) has a handset (22, 23) on the side remote from the keypads (24 to 26).

17. Digital voice memory according to one of Claims 14 to 16, characterized in that the portable input unit (21) has an infrared transmitting and receiving device (30).

18. Digital voice memory according to one of Claims 14 to 17, characterized in that when the portable input unit (21) is put into a case, the device selection keys (25) and the cursor operating elements (26) are freely accessible for actuation.

19. Digital voice memory according to Claim 14, characterized in that the stationary data input (31) preferably has cursor operating elements (29) and is arranged on a steering wheel spoke at the edge of a steering wheel located in the motor vehicle.

## Revendications

1. Mémoire vocale numérique pour des informa-tions destinées à un véhicule automobile, comprenant des appareils externes par exemple un récepteur radio, un décodeur radio de circulation et un téléphone mobile, caractérisée en ce que la mémoire vocale numérique (2) est subdivisée en des zones de mémoire (A à C) susceptibles d'être effacées par enregistrement et des zones qui ne peuvent être effacées, la dimension des zones étant fixée en ce qu'à chaque zone des mémoires (A à C) est chaque fois associé de manière fixe un appareil externe (11 à 20), pour que les informations de ces appareils externes puissent être enregistrées dans ces zones de mémoire, une mémoire variable (D) étant prévue pour servir de mémoire complémentaire aux parties de la mémoire vocale (A à C) dont la dimension est fixée, et les appareils externes (11-20) ont accès à la mémoire variable (D) pour enregistrer des informations, la répartition de la mémoire variable (D) en fonction des informations à enregistrer étant variable et en ce qu'il est prévu un sélecteur de zone (3) qui gère les zones de mémoire (A à B) de la mémoire vocale numérique (2).

2. Mémoire vocale numérique selon la revendication 1, caractérisée en ce que la mémoire vocale numérique (2) est une mémoire à semi-conducteurs.

3. Mémoire vocale numérique selon l'une des revendications précédentes, caractérisée en ce que la mémoire vocale numérique (2) est reliée à une matrice de commutation (6) et des appareils (11 à 20) sont reliés à la matrice de commutation (6), de préférence un récepteur radio, un téléphone mobile, une installation de conversations libres, un lecteur de disques CD, un système de localisation et/ou de navigation, une installation d'alarme et un appareil de contrôle du véhicule.

4. Mémoire vocale numérique selon l'une des revendications précédentes, caractérisée en ce qu'un synthétiseur vocal (4) est commandé par la mémoire vocale numérique (2).

5. Mémoire vocale numérique selon la revendication 4, caractérisée ne ce que la reproduction des informations contenues dans la mémoire vocale numérique (2) se fait par l'autoradio (11) et les haut-parleurs (12) reliés à celui-ci.

6. Mémoire vocale numérique selon l'une des revendications précédentes, caractérisée en ce que la mémoire vocale numérique (2) contient des données résidentes qui ne peuvent être effacées par un nouvel enregistrement.

7. Mémoire vocale numérique selon l'une quelconque des revendications précédentes, caractérisée en ce que la mémoire vocale numérique (2) peut être commandée par des signaux de commande externes de préférence par l'entrée de données (7).

8. Mémoire vocale numérique selon l'une des revendications précédentes, caractérisée en ce que chaque fois une partie de l'ensemble de la mémoire vocale est utilisée pour des informations d'avertissement, pour un texte d'informations du téléphone mobile et pour des notes et en ce que la partie restante peut être utilisée pour les informations de circulation et d'autres notes, après les textes d'informations.

9. Mémoire vocale numérique selon la revendication 8, caractérisée en ce que les zones de mémoire pour les notes, appels et textes d'informations, ne peuvent être effacées que par l'enregistrement de données de même type alors que la mémoire d'information de circulation peut être effacée par l'enregistrement de données de n'importe quel type en tenant compte de la date d'enregistrement et du temps.

10. Mémoire vocale numérique selon la revendication 1, caractérisée en ce que les unités d'affichage des différents appareils (11 à 20) sont combinées en une sortie centrale de données (8).

11. Mémoire vocale numérique selon la revendication 10, caractérisée en ce que la sortie de données (8) comprend un moniteur subdivisé de préférence en une zone de protocole (81), une zone d'action (82) et une zone de menu (83).

12. Mémoire vocale numérique selon l'une des revendications 10 ou 11, caractérisée en ce que le moniteur peut pivoter et/ou basculer.

13. Mémoire vocale numérique selon l'une des revendications 10 à 12, caractérisée par des champs de données dans la zone d'action (82) dans lesquels s'affichent les actions instantanées de la mémoire vocale numérique (2).

14. Mémoire vocale numérique selon la revendication 1, caractérisée en ce que l'entrée de données (7) comporte deux ensembles indépendants (21, 31) dont l'un des ensembles d'entrée (31) fixe est monté de préférence sur le volant d'un véhicule automobile et l'autre unité d'entrée (21) est portative et peut se placer dans un carquois, à portée de mains du conducteur et du passager.

15. Mémoire vocale numérique selon la revendication 14, caractérisée en ce que l'unité d'entrée (21) comporte un clavier alphanumérique (24), un clavier de sélection d'appareil (25) et des éléments de commande de curseur (26).

16. Mémoire vocale numérique selon l'une quelconque des revendications 14 ou 15, caractérisée en ce que l'unité d'entrée (21) comporte un élément à écouteur et micro (22, 23) du côté opposé des claviers (24 à 26).

17. Mémoire vocale numérique selon l'une des revendications 14 à 16, caractérisée en ce que l'ensemble d'entrée portative (21) comprend une installation d'émission et de réception par infrarouge (30).

18. Mémoire vocale numérique selon l'une des revendications 14 à 17, caractérisée en ce que lorsqu'on dépose l'unité portative (21) dans un carquois, les touches de sélection d'appareil (25) et les éléments de commande de curseur (26) sont librement accessibles pour leur commande.

19. Mémoire vocale numérique selon la revendication 14, caractérisée en ce que l'entrée de données (31) fixe comporte de préférence des éléments de commande de curseur (29) et est montée sur un bras de volant sur le bord du volant d'un véhicule automobile.
